# EUROPEAN PATENT APPLICATION

(11) **EP 4 482 177 A1**
(43) Date of publication of application: **25.12.2024**
(21) Application number: 22926410.6
(22) Date of filing: 16.02.2022
(51) Int. Cl.: H04W 4/02, H04W 64/00, H04W 72/04

(54) **COMMUNICATION METHOD AND COMMUNICATION APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/076509
(87) International publication number: WO 2023/155072

(57) **Abstract**

The present application provides a communication method and a communication apparatus. The communication method may include: determining a trigger frame, wherein the trigger frame comprises a first information domain, the first information domain comprises type information identifying the trigger frame, and the type of the trigger frame is used for identifying a different stage of wireless local area network sensing initiated by an access point device; and sending the trigger frame.

## Description

### FIELD

The present invention relates to the field of wireless communications, and more specifically, to a communication method and a communication apparatus for a wireless local area network (WLAN).

### BACKGROUND

A WLAN has the characteristics of flexibility, mobility and low cost. With the development of the communication technology and the growth of user demand for wireless communications, more research into the applications of WLAN is being done. For example, WLAN sensing is being studied, and its main application scenarios include location discovery in dense environments (home and enterprise environments), proximity detection, and presence detection, etc.

### SUMMARY

Various embodiments of the present invention provide the following technical solutions.

According to illustrative embodiments of the present invention, a communication method is provided. The communication method may be performed by an access point device, and includes: determining a trigger frame; and sending the trigger frame. The trigger frame includes a first information field, the first information field includes type information indicating a type of the trigger frame, and the type of the trigger frame indicates different phases of wireless local area network sensing initiated by the access point device.

According to illustrative embodiments of the present invention, a communication method is provided. The communication method may be performed by a station device, and includes: receiving a trigger frame; and performing a corresponding communication operation according to the trigger frame. The trigger frame includes a first information field, the first information field includes type information indicating a type of the trigger frame, and the type of the trigger frame indicates different phases of wireless local area network sensing initiated by an access point device.

According to illustrative embodiments of the present invention, a communication apparatus is provided. The communication apparatus is applicable to an access point device, and includes a processing module and a transceiving module. The processing module is configured to determine a trigger frame. The trigger frame comprises a first information field, the first information field comprises type information indicating a type of the trigger frame, and the type of the trigger frame indicates different phases of wireless local area network sensing initiated by the access point device. The transceiving module is configured to send the trigger frame.

According to illustrative embodiments of the present invention, a communication apparatus is provided. The communication apparatus is applicable to a station device, and includes a transceiving module and a processing module. The transceiving module is configured to receive a trigger frame. The trigger frame comprises a first information field, the first information field comprises type information indicating a type of the trigger frame, and the type of the trigger frame indicates different phases of wireless local area network sensing initiated by an access point device. The processing module is configured to control implementation of a corresponding communication operation according to the trigger frame.

According to illustrative embodiments of the present invention, an electronic device is provided. The electronic device includes: a memory, a processor and a computer program stored in the memory and executable on the processor. The processor, when executing the computer program, performs the method as described above.

According to illustrative embodiments of the present invention, a computer-readable storage medium is provided. The computer-readable storage medium has stored therein a computer program that, when executed by a processor, causes the method as described above to be implemented.

The technical solutions according to illustrative embodiments of the present invention can improve and adapt to the needs of WLAN sensing.

### BRIEF DESCRIPTION OF THE DRAWINGS

The above and other features of embodiments of the present invention will become more apparent with the descriptions of illustrative embodiments of the present invention in detail with reference to the accompanying drawings, in which:
FIG. 1 shows illustrative manners of WLAN sensing.
FIG. 2 is a schematic diagram showing a measurement process in a TB-based mode.
FIG. 3 is a schematic flowchart of a communication method according to illustrative embodiments of the present invention.
FIG. 4 is a schematic flowchart for determining a trigger frame according to illustrative embodiments of the present invention.
FIG. 5 is a schematic flowchart of another communication method according to illustrative embodiments of the present invention.
FIG. 6 is a schematic flowchart showing interactions between an AP and an STA according to illustrative embodiments of the present invention.
FIG. 7 is a schematic block diagram of a communication apparatus according to illustrative embodiments of the present invention.

### DETAILED DESCRIPTION

The following description with reference to the accompanying drawings is provided to assist in comprehensive understanding of embodiments of the present invention as defined by the appended claims and their equivalents. The embodiments of the present invention include various specific details, which are regarded as examples merely. Also, the descriptions of the well-known techniques, functions, and constructions may be omitted for clarity and conciseness.

The terms and words used in the present invention are not limited to the bibliographical meanings, but be used by the inventor to enable a clear and consistent understanding of the present invention. Accordingly, it will be appreciated by those skilled in the art that the descriptions of embodiments of the present invention are provided for purposes of illustration and not for purpose of limitation.

It should be understood that, unless clearly indicated in the context otherwise, the singular forms "a", "an", "said" and "the" used herein may also include plural forms. It should be further understood that the words "include", "comprise" and the variants thereof as used in the present invention refer to the presence of the described features, integers, steps, operations, components and/or assemblies, but do not exclude the presence or addition of one or more other features, integers, steps, operations, components, assemblies and/or groups thereof.

It should be understood that, although the terms "first", "second" and the like may be used to describe various elements, these elements shall not be limited by these terms. These terms are used to distinguish one element from another. Thus, a first element discussed below may also be referred to as a second element without departing from the teachings of illustrative embodiments.

It should be understood that when a component is "connected" or "coupled" to another component, it may be directly connected or coupled to another component, or there may be an intermediate component. In addition, the terms "connected" or "coupled" as used herein may include a wireless manner. The term "and/or" or the expression "at least one of ..." includes combinations of one or more or all of the associated items listed.

Unless otherwise defined, all terms (including technical and scientific terms) used herein have the same meaning as commonly understood by those skilled in the art to which the present invention belongs.

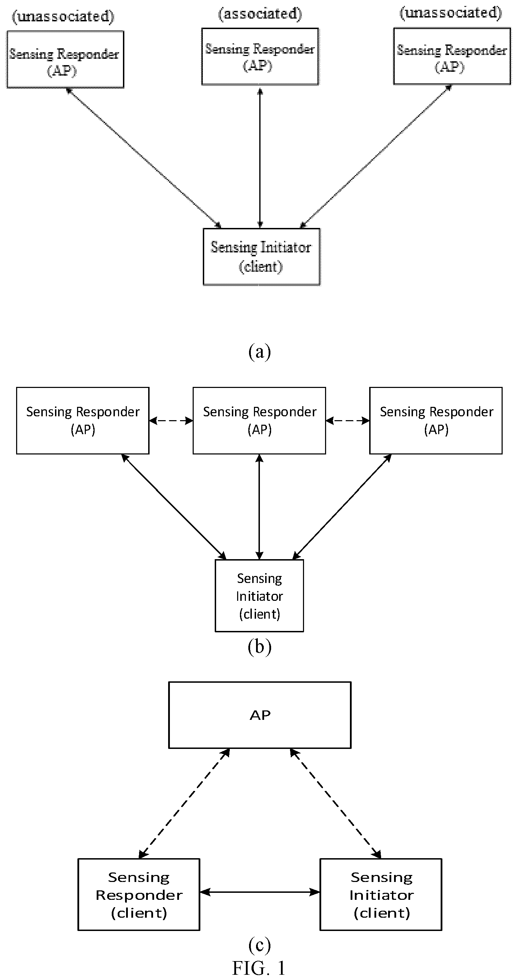

FIG. 1 shows illustrative manners of WLAN sensing.

The WLAN sensing may have the following process: an initiator initiates the WLAN sensing, for example, the initiator initiates a WLAN sensing session, and a plurality of responders may make a response thereto in possible manners as shown in FIG. 1(a), FIG. 1(b) and FIG. 1(c).

Referring to FIG. 1(a), when a WLAN sensing initiator (e.g., a client) initiates WLAN sensing, a plurality of associated or non-associated WLAN sensing responders (e.g., three access points (Aps)) may make a response thereto. Here, "associated" may mean that an associated connection for communication has been established between the initiator and the responder, and "non-associated" may mean that no associated connection for communication has been established between the initiator and the responder.

As examples, the client may include, but not limited to: a cellular phone, a smartphone, a wearable device, a computer, a personal digital assistant (PDA), a personal communications system (PCS) device, a personal information manager (PIM), a personal navigation device (PND), a global positioning system, a multimedia device, an Internet of Things (IoT) device, etc.

AP may be a wireless switch or an access device for a wireless network. The AP may include a software application and/or circuitry to enable other types of nodes in the wireless network to communicate with outside and inside of the wireless network via the AP. As an example, the AP may be a terminal device or a network device equipped with a wireless fidelity (Wi-Fi) chip.

FIG. 1(b) is similar to FIG. 1(a), but in FIG. 1(b), individual responders (APs) can communicate with each other.

Referring to FIG. 1(c), both the WLAN sensing initiator and the WLAN sensing responder may be clients, and they can communicate with each other through connection to the same AP.

Although FIG. 1(a), FIG. 1(b) and FIG. 1(c) show that the client serves as the initiator, and the AP serves as the responder, the present invention is not limited thereto. For example, the AP may serve as the initiator, and the client may serve as the responder. In addition, the number of initiators and the number of responders are not limited to those shown in FIG. 1(a), FIG. 1(b) and FIG. 1(c).

As an illustrative embodiment, the process of the WLAN sensing may include: WLAN sensing session setup, WLAN sensing measurement setup, and WLAN sensing measurement termination. In the WLAN sensing session setup, operating parameters associated with a sensing session may be determined and exchanged between devices. In the WLAN sensing measurement setup, sensing measurement and/or report of a measurement result may be performed, so the WLAN sensing measurement setup may also be called a WLAN sensing measurement process. In the WLAN sensing measurement termination, devices stop the measurement and terminate the sensing session.

In addition, in the WLAN sensing technique, a trigger-based (TB-based) sensing manner is proposed. For example, in the TB-based sensing manner, an AP may be the initiator, and a station (STA) may be the responder. Examples of the station (STA) may be similar to the above examples of the client, and for the sake of brevity, repeated descriptions are omitted here.

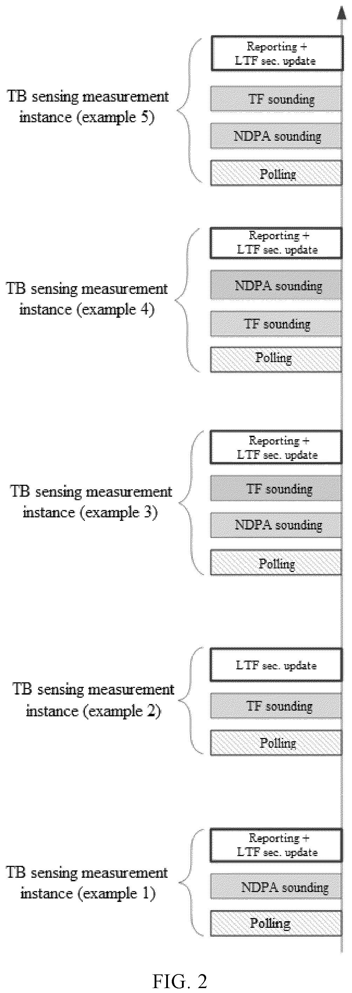

In the TB-based sensing manner, the WLAN sensing measurement process may include three phases: a polling phase, a measurement phase, and a feedback phase. These processes all may be trigger-based, as shown in FIG. 2.

In FIG. 2, each of TB-based sensing measurement examples as shown in Example 1 to Example 5 may represent a WLAN sensing measurement process, and may include three phases, i.e., the polling phase, the measurement phase, and the feedback phase.

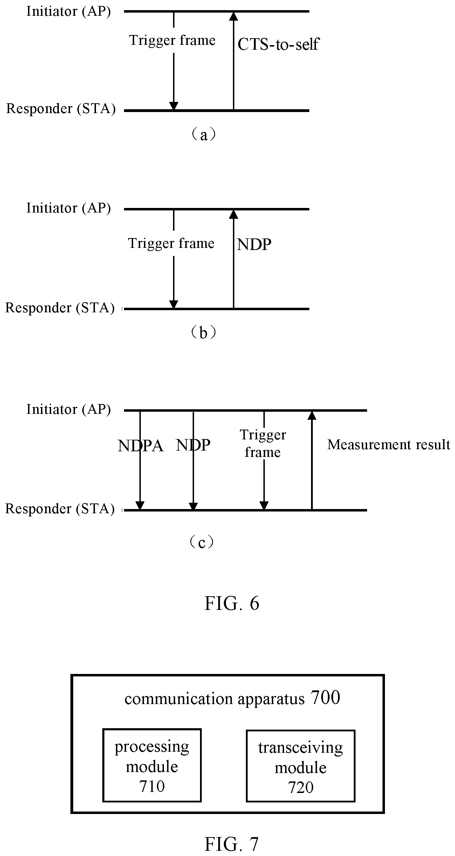

In the polling phase (as shown in FIG. 6(a) to be described below), the initiator (AP) may send a trigger frame to check the availability of the responder (one or more STAs); if the STA is available, the STA may send a response frame (e.g., CTS-to-self).

In the measurement phase, a null data packet announcement (NDPA) sounding manner (hereinafter may be referred to as "NDPA sounding" or "NDPA detecting") and/or a trigger frame (TF) sounding manner (hereinafter may be referred to as "TF sounding" or "TF detecting") may be adopted.

In the case of the TF sounding (as shown in FIG. 6(b) to be described below), the initiator (AP) may send a trigger frame, and then the responder (STA) may send an NDP frame to the initiator, so that the initiator (AP) can perform the WLAN sensing measurement using the NDP frame. In the case of the TF sounding, since the initiator (AP) can perform the WLAN sensing measurement, there is no need to feed back the WLAN sensing measurement result in the feedback process, and the TF sounding manner may also be called uplink sensing.

In the case of the NDPA sounding (as shown in FIG. 6(c) to be described below), the initiator (AP) may send an NDPA frame, and then send an NDP frame immediately; and one or more responders (STAs) may receive the NDPA frame and the NDP frame, and perform the WLAN sensing measurement. Then, in the feedback phase, the initiator (AP) may send a trigger frame, and the responder (STA) may report the WLAN sensing measurement result to the initiator in response to the trigger frame. The NDPA sounding manner may also be called downlink sensing. In addition, as shown in FIG. 2, in the feedback phase, a long training field (LTF) may be updated.

According to the above description, the AP may send the trigger frame in each of the three phases, i.e., the polling phase, the measurement phase, and the feedback phase. However, in the current research, the format of the trigger frame sent by the AP is not clearly specified, which needs to be enhanced.

In view of this, communication methods and communication apparatuses according to embodiments of the present invention are proposed.

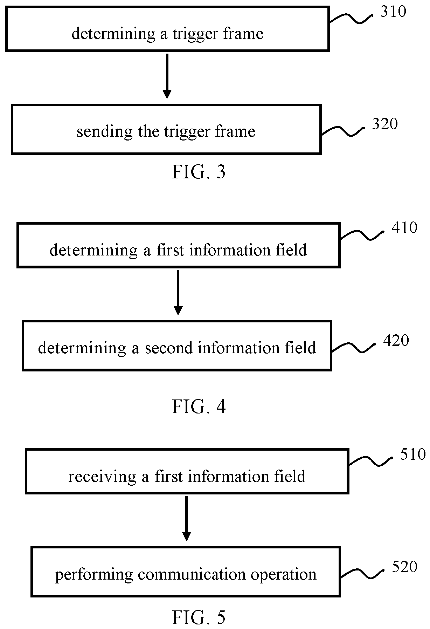

FIG. 3 is a schematic flowchart of a communication method according to illustrative embodiments of the present invention. The communication method shown in FIG. 3 may be performed by an initiator (e.g., an access point device, referred to as "AP" for short below) of WLAN sensing.

Referring to FIG. 3, in step 310, a trigger frame is determined; in step 320, the trigger frame may be sent. According to embodiments of the present invention, the trigger frame may include a first information field, the first information field may include type information indicating a type of the trigger frame, and the type of the trigger frame indicates different phases of WLAN sensing initiated by the access point device. For example, as described above with reference to FIG. 2, the type of the trigger frame may indicate a polling phase, an uplink sensing measurement phase (or called "TF sensing phase"), or a downlink sensing report phase (i.e., corresponding to a feedback phase for NDPA sensing).

As a non-limiting embodiment, the first information field may be a common information (common info) field in the trigger frame. In the following, for the convenience of description, the first information field and the common information field are interchangeable. According to embodiments of the present invention, in the common information field, two bits may be used to indicate the type information, for example, "00" indicates the polling phase (or called "trigger poll"), and this type of trigger frame can indicate or instruct to detect whether an STA is in an available status before the WLAN sensing measurement; "01" indicates the uplink sensing measurement phase (or called "trigger sounding/NDP"), and this type of trigger frame can indicate or instruct the STA to send an uplink NDP frame or a secure NDP; and " 1 0" indicates the downlink sensing report phase (or called "trigger report"), and this type of trigger frame can indicate or instruct the STA to send a downlink sensing measurement result. However, the present invention is not limited thereto, and other different values or other numbers of bits may be used to indicate the type information.

In addition, according to embodiments of the present invention, the trigger frame may further include a second information field related to a station device (as the responder), and the second information field may include different information depending on different types of trigger frame indicated by the type information. As a non-limiting embodiment, the second information field may be a station information (STA info) field in the trigger frame. In the following, for convenience of description, the second information field and the station information field are interchangeable. The first information field and the second information field of the trigger frame will be described in more detail below with reference to various embodiments.

According to embodiments of the present invention, trigger frames including different contents may be determined according to different phases of the WLAN sensing.

In an embodiment of the present invention, a method for determining a trigger frame may include: determining a trigger frame in the polling phase of the WLAN sensing. For example, the trigger frame may include a first information field and/or a second information field.

According to an illustrative embodiment, the first information field may include type information, the type information may indicate a first type corresponding to the polling phase of the WLAN sensing, and the trigger frame of the first type may be used for detecting an availability status of the station device. That is, in the polling phase, the initiator (AP) can detect the existence of one or more STAs by using the trigger frame, and only when the existence of the STA (in an available status) is detected, the TF or NDPA sounding phase or the measurement result feedback phase may be performed subsequently. For example, when the AP receives a response frame (e.g., but not limited to, a CTS-to-self frame) as a response to the trigger frame from the STA, the AP may detect that the STA is available.

For example, the first information field may further include: bandwidth information for the station device to send a response frame as a response to the trigger frame. In other words, when determining the trigger frame, the AP may allocate to the STA a bandwidth to be used by the STA for sending the CTS-to-self frame through the bandwidth information in the first information field.

In addition, in the WLAN sensing, there may be one or more sensing measurement setups, and in each sensing measurement setup, one or more sensing measurement instances may be included. The station device may participate in one or more sensing measurement instances in the same or different sensing measurement setups. When detecting the availability status of the station device in the polling phase, it may be necessary to determine the availability status of the station device in each sensing measurement instance in which it participates. Therefore, the first information field may further include: at least one sensing measurement setup identifier and/or an identifier of at least one sensing measurement instance corresponding to each sensing measurement setup identifier. As a descriptive embodiment, the at least one sensing measurement setup identifier and the identifier of the at least one sensing measurement instance may be included in dialog token information in the first information field.

According to embodiments of the present invention, the first information field (common information field) of the trigger frame in the polling phase may have the format shown in Table 1 below.

**Table 1**

| | | |
|---|---|---|
| dialog token | trigger type (00) | bandwidth |

In Table 1, the dialog token may represent the dialogue token information, the trigger type may represent the type information corresponding to the first type, and the bandwidth (BW) may represent the bandwidth information.

For example, the dialog token may be composed of two parts, i.e., the sensing measurement setup identifier (measurement setup ID) and the sensing measurement instance identifier (measurement instance ID). Corresponding to the same measurement setup ID, there may exist a plurality of measurement instance IDs. However, the present invention is not limited thereto. The dialog token may include more information, for example, the dialog token may also include a sensing session setup identifier (session setup ID), and corresponding to the same session setup ID, there may exist a plurality of measurement setup IDs; or the dialog token may include less information, for example, when only the sensing measurement instances in a sensing measurement setup are involved in the polling phase, the sensing measurement setup identifier may be omitted, or when all sensing measurement instances in individual sensing measurement setups are involved in the polling phase, only individual sensing measurement setup identifiers are included, and the sensing measurement instance identifiers may be omitted. With the information in the dialog token, the availability status of one or more STAs in the corresponding sensing measurement instance can be detected.

For example, the trigger type may have two bits, and its value may be "00" to indicate the first type corresponding to the polling phase of the WLAN sensing, however the present invention is not limited thereto.

For example, the bandwidth can indicate the bandwidth information for the station device in the available status to send the response frame (for example, CTS-to-self) as a response to the trigger frame. For example, its value may indicate 20 MHz, 40 MHz, 80 MHz, 160 MHz, or 320 MHz, however the present invention is not limited thereto.

According to illustrative embodiments, a method for determining a trigger frame includes the followings. In a case where the type information indicates the first type (the polling phase), the second information field of the trigger frame may include: identification information of the station device; and allocation information of a resource unit allocated to the station device for sending the response frame. For example, the second information field (the station information field) of the trigger frame in the polling phase may have the format shown in Table 2 below.

**Table 2**

| | |
|---|---|
| AID/UID | RU allocation |

In Table 2, AID/UID may represent the identification information of the station device, where AID is the identifier of an STA that has established an initial association with the AP, and UID is the identifier of an STA that has not established an initial association with the AP. RU allocation (resource unit allocation) may represent a resource unit (RU) allocated to the STA for sending the response frame (e.g., CTS-to-self). Although only one AID/UID and one RU allocation are shown in Table 2, the present invention is not limited thereto, and there may be a plurality of second information fields, that is, there may be a plurality of AIDs/UIDs and corresponding RU allocations.

Although the contents of the first information field and the second information field of the trigger frame in the polling phase are shown in Table 1 and Table 2 respectively, the present invention is not limited thereto. For example, a part of the contents may be omitted, or more contents may be included. For example, since the CTS-to-self sent by the STA is lightweight and does not require much time and resources, the BW and/or the RU allocation may be omitted.

In another embodiment of the present invention, a method for determining a trigger frame may include: determining a trigger frame in an uplink sensing measurement phase of the WLAN sensing. For example, the trigger frame may include a first information field and/or a second information field.

According to illustrative embodiments, the first information field may include type information, the type information may indicate a second type corresponding to the uplink sensing measurement phase of the WLAN sensing, and the trigger frame of the second type may indicate the station device to send the uplink sensing measurement frame. For example, the uplink sensing measurement frame may be an uplink NDP frame or a secure NDP frame.

For example, the first information field may further include: bandwidth information for the station device to send the uplink sensing measurement frame. In other words, when determining the trigger frame, the AP may allocate to the STA a bandwidth to be used by the STA for sending the uplink (UL) NDP frame or the secure NDP frame through the bandwidth information in the first information field.

Additionally, the AP may initiate one or more sensing measurement instances in one or more sensing measurement setups. Therefore, the first information field may further include: at least one sensing measurement setup identifier and/or an identifier of at least one sensing measurement instance corresponding to each sensing measurement setup identifier. As a descriptive embodiment, the at least one sensing measurement setup identifier and the identifier of the at least one sensing measurement instance may be included in dialog token information in the first information field.

According to embodiments of the present invention, the first information field (common information field) of the trigger frame in the uplink sensing measurement phase may have the format shown in Table 3 below.

**Table 3**

| | | |
|---|---|---|
| dialog token | trigger type (01) | UL BW |

In Table 3, the dialog token may represent the dialogue token information, the trigger type may represent the type information corresponding to the second type, and the UL BW may represent the bandwidth information.

For example, the dialog token may be composed of two parts, i.e., the sensing measurement setup identifier (measurement setup ID) and the sensing measurement instance identifier (measurement instance ID). Corresponding to the same measurement setup ID, there may exist a plurality of measurement instance IDs. However, the present invention is not limited thereto. The dialog token may include more information, for example, the dialog token may also include a sensing session setup identifier (session setup ID), and corresponding to the same session setup ID, there may exist a plurality of measurement setup IDs; or the dialog token may include less information, for example, the sensing measurement setup identifier may be omitted, or the sensing measurement instance identifier may be omitted.

For example, the trigger type may have two bits, and its value may be "01" to indicate the second type corresponding to the uplink sensing measurement phase of the WLAN sensing, however the present invention is not limited thereto.

For example, the UL BW may be the transmission bandwidth for the station device to send the UL NDP frame. For example, its value may indicate 20 MHz, 40 MHz, 80 MHz, 160 MHz, or 320 MHz, however the present invention is not limited thereto.

According to illustrative embodiments, in the case where the type information indicates the second type (the uplink sensing measurement phase), the second information field of the trigger frame may include at least one of
identification information of the station device (such as "AID/UID" in Table 4);
allocation information of a resource unit allocated to the station device for sending the uplink sensing measurement frame (such as "RU allocation" in Table 4);
allocation information of a spatial stream allocated to the station device for sending the uplink sensing measurement frame (such as "SS allocation" in Table 4); and
uplink target power information indicating a power value at which the access point device expects to receive the uplink sensing measurement frame (such as "UL target power" in Table 4).

For example, the second information field (the station information field) of the trigger frame in the uplink sensing measurement phase may have the format shown in Table 4 below.

**Table 4**

| | | | |
|---|---|---|---|
| AID/UID | RU allocation | SS allocation | UL target power |

In Table 4, AID/UID may represent the identification information of the station device, where AID is the identifier of an STA that has established an initial association with the AP, and UID is the identifier of an STA that has not established an initial association with the AP. RU allocation (resource unit allocation) may represent a resource unit (RU) for the STA to send the uplink sensing measurement frame (e.g., the UL NDP frame). SS allocation (spatial stream allocation) may indicate the number of spatial streams allocated to the STA for transmitting the uplink sensing measurement frame. UL target power may indicate the power value at which the AP expects to receive the uplink NDP, this power value may be used by the AP to perform the WLAN sensing measurement, and if the power is less than this value, the implementation of the WLAN sensing measurement cannot be guaranteed, so the AP can notify the STA not to send the NDP frame less than this power value by carrying UL target power information in the trigger frame to ensure the smooth implementation of the WLAN sensing measurement. For different STAs, the UL target power may be different. Although only one second information field is shown in Table 4, the present invention is not limited thereto, and more second information fields may be included in the trigger frame to indicate more STAs and various resources allocated thereto.

Although the contents of the first information field and the second information field of the trigger frame in the uplink sensing measurement phase are shown in Table 3 and Table 4 respectively, the present invention is not limited thereto. For example, a part of the contents may be omitted, or more contents may be included.

In another embodiment of the present invention, a method for determining a trigger frame may include: determining a trigger frame in a downlink sensing report phase of the WLAN sensing. For example, the trigger frame may include a first information field and/or a second information field.

According to illustrative embodiments, the first information field may include type information, the type information may indicate a third type corresponding to the downlink sensing report phase of the WLAN sensing, and the trigger frame of the third type may indicate the station device to send the downlink sensing measurement result. That is to say, the initiator (AP) may trigger the station device to feed back the sensing measurement result, such as channel status information (CSI), through the trigger frame.

For example, the first information field may further include: bandwidth information for the station device to send the downlink sensing measurement result. In other words, when determining the trigger frame, the AP may allocate a bandwidth to the STA to feed back the downlink sensing measurement result (e.g., CSI) through the bandwidth information in the first information field.

Additionally, in the WLAN sensing, there may be one or more sensing measurement setups, and in each sensing measurement setup, one or more sensing measurement instances may be included. The AP may indicate a sensing measurement instance whose measurement result needs to be fed back by the station device. Therefore, the first information field may further include: at least one sensing measurement setup identifier and/or an identifier of at least one sensing measurement instance corresponding to each sensing measurement setup identifier. As a descriptive embodiment, the at least one sensing measurement setup identifier and the identifier of the at least one sensing measurement instance may be included in dialog token information in the first information field.

According to embodiments of the present invention, the first information field (common information field) of the trigger frame in the downlink sensing report phase may have the format shown in Table 5 below.

**Table 5**

| | | |
|---|---|---|
| dialog token | trigger type (10) | bandwidth |

In Table 5, the dialog token may represent the dialogue token information, the trigger type may represent the type information corresponding to the third type, and the bandwidth (BW) may represent the bandwidth information.

For example, the dialog token may be composed of two parts, i.e., the sensing measurement setup identifier (measurement setup ID) and the sensing measurement instance identifier (measurement instance ID). Corresponding to the same measurement setup ID, there may exist a plurality of measurement instance IDs. However, the present invention is not limited thereto. The dialog token may include more information, for example, the dialog token may also include a sensing session setup identifier (session setup ID); or the dialog token may include less information, for example, the sensing measurement setup identifier may be omitted, or the sensing measurement instance identifier may be omitted. With the information in the dialog token, the AP may indicate the STA to feed back the measurement result of the corresponding sensing measurement instance.

For example, the trigger type may have two bits, and its value may be "10" to indicate the third type corresponding to the downlink sensing report phase of the WLAN sensing, however the present invention is not limited thereto.

For example, the bandwidth may be bandwidth information for the station device to send the downlink sensing measurement result (e.g., CSI). For example, its value may indicate 20 MHz, 40 MHz, 80 MHz, 160 MHz, or 320 MHz, however the present invention is not limited thereto.

According to illustrative embodiments, in the case where the type information indicates the third type (the downlink sensing report phase), the second information field of the trigger frame may include at least one of
identification information of the station device (such as "AID/UID" in Table 6);
allocation information of a resource unit allocated to the station device for sending the downlink sensing measurement result (such as "RU allocation" in Table 6);
allocation information of a spatial stream allocated to the station device for sending the downlink sensing measurement result (such as "SS allocation" in Table 6); and
indicating a modulation and coding scheme to be used by the station device to send the downlink sensing measurement result (such as "UL MCS" in Table 6).

For example, the second information field (the station information field) of the trigger frame in the downlink sensing report phase may have the format shown in Table 6 below.

**Table 6**

| | | | |
|---|---|---|---|
| AID/UID | RU allocation | SS allocation | UL MCS |

In Table 6, AID/UID may represent the identification information of the station device, where AID is the identifier of an STA that has established an initial association with the AP, and UID is the identifier of an STA that has not established an initial association with the AP. RU allocation (resource unit allocation) may indicate a resource unit (RU) allocated to the STA for sending the downlink sensing measurement result (e.g., CSI), and for different STAs, the RU may be different, which can avoid interferences when different STAs feed back measurement results. SS allocation (spatial stream allocation) may indicate the number of spatial streams allocated to the STA for sending the downlink sensing measurement result. In the case where the trigger frame is of the third type (trigger report), there may exist an UL MCS subfield, which may indicate an MCS manner for the STA to send the downlink sensing measurement result. Although only one second information field is shown in Table 6, the present invention is not limited thereto, and the trigger frame may include more second information fields to indicate more STAs and various resources allocated thereto.

Although the contents of the first information field and the second information field of the trigger frame in the downlink sensing report phase are shown in Table 5 and Table 6 respectively, the present invention is not limited thereto. For example, a part of the contents may be omitted, or more contents may be included.

In the communication method according to embodiments of the present invention, different formats are defined for the trigger frame in different phases of the WLAN sensing, which improves the content of the trigger frame and can be applied to WLAN sensing scenarios better.

FIG. 4 is a schematic flowchart of a method for determining a trigger frame performed by an initiator (e.g., AP) according to illustrative embodiments.

Referring to FIG. 4, in an embodiment of the present invention, a method for determining a trigger frame may include determining a first information field (step 410), and determining a second information field (step 420). The first information field and the second information field may be similar to those described in embodiments above with reference to Table 1 to Table 6. Although step 410 and step 420 are shown sequentially in FIG. 4, the method of determining the trigger frame is not limited to the flowchart shown in FIG. 4, for example, step 410 and step 420 may be performed simultaneously, or either of these two steps is performed in the method for determining the trigger frame.

In another embodiment of the present invention, a method for determining a trigger frame may include determining a first information field. For example, the first information field may include at least one sensing measurement setup identifier and/or an identifier of at least one sensing measurement instance corresponding to each sensing measurement setup identifier. For example, the at least one sensing measurement setup identifier and the identifier of the at least one sensing measurement instance may be included in dialog token information in the first information field. By determining the trigger frame containing such a first information field, the AP subsequently can perform a corresponding triggering operation on the specific measurement sensing setup phase or the specific sensing measurement instance. However, the present invention is not limited thereto, and the first information field (e.g., dialog token information) may include more information, for example, the first information field may also include the sensing session setup identifier; or the dialog token may include less information, for example, the sensing measurement setup identifier or the sensing measurement instance identifier may be omitted.

In another embodiment of the present invention, a method for determining a trigger frame may include determining a first information field. For example, the first information field may include type information indicating a type of the trigger frame. The type of the trigger frame may indicate different phases of WLAN sensing initiated by an AP. For example, the type of the trigger frame may include a first type corresponding to a polling phase, a second type corresponding to an uplink sensing measurement phase, or a third type corresponding to a downlink sensing report phase. Different bits in the first information field may be used to indicate different type information, so that the trigger frame can be better adapted to individual phases of the WLAN sensing. However, the present invention is not limited thereto. For example, the first information field may also include bandwidth information and the like.

In another embodiment of the present invention, a method for determining a trigger frame may include: determining a second information field. The second information field is associated with a station device. In other words, the AP can allocate various resources to the station device or notify the station device of operating parameters required for the WLAN sensing through the second information field in the trigger frame, thereby avoiding the conflict in the case where one or more station devices transmits various information to the AP, and improving the communication efficiency. According to illustrative embodiments, the second information field may include, for example, but not limited to, at least one of
identification information of the station device (e.g., AID/UID);
allocation information of a resource unit (e.g., RU allocation) allocated to the station device for transmitting information (e.g., the uplink sensing measurement frame or the downlink sensing measurement result);
allocation information of a spatial stream (e.g., SS allocation) allocated to the station device for transmitting information (e.g., the uplink sensing measurement frame or the downlink sensing measurement result); and
uplink target power information (e.g., UL target power) indicating a power value at which the access point device expects to receive the uplink sensing measurement frame;
indicating a modulation and coding scheme (e.g., UL MCS) to be used by the station device to send the downlink sensing measurement result.

FIG. 5 is a schematic flowchart of a communication method performed by a responder (e.g., a station device) according to illustrative embodiments.

Referring to FIG. 5, in step 510, a trigger frame is received. For example, the trigger frame may include a first information field, the first information field may include type information indicating a type of the trigger frame, and the type of the trigger frame may indicate different phases of WLAN sensing initiated by an access point device.

According to an embodiment of the present invention, the type information may indicate a first type corresponding to a polling phase of the WLAN sensing, and the trigger frame of the first type may be used for detecting an availability status of the station device. For example, the first information field may also include: bandwidth information for the station device to send a response frame as a response to the trigger frame. For example, the first information field may further include: at least one sensing measurement setup identifier, and/or an identifier of at least one sensing measurement instance corresponding to each sensing measurement setup identifier. The at least one sensing measurement setup identifier and the identifier of the at least one sensing measurement instance may be included in dialog token information in the trigger frame. For example, the trigger frame may also include a second information field related to the station device. In the case where the type information indicates the first type, the second information field may include: identification information of the station device; and allocation information of a resource unit allocated to the station device for sending the response frame. The embodiments described above with reference to Table 1 and Table 2 are also applicable here, which will not be elaborated for the sake of brevity.

According to another embodiment of the present invention, the type information may indicate a second type corresponding to an uplink sensing measurement phase of the WLAN sensing, and the trigger frame of the second type may indicate the station device to send an uplink sensing measurement frame. For example, the first information field may also include: bandwidth information for the station device to send the uplink sensing measurement frame. For example, the first information field may further include: at least one sensing measurement setup identifier, and/or an identifier of at least one sensing measurement instance corresponding to each sensing measurement setup identifier. The at least one sensing measurement setup identifier and the identifier of the at least one sensing measurement instance may be included in dialog token information in the trigger frame. For example, the trigger frame may also include a second information field related to the station device, and in the case where the type information indicates the second type, the second information field may include at least one of: identification information of the station device; allocation information of a resource unit allocated to the station device for sending the uplink sensing measurement frame; allocation information of a spatial stream allocated to the station device for sending the uplink sensing measurement frame; and uplink target power information indicating a power value at which the access point device expects to receive the uplink sensing measurement frame.

The embodiments described above with reference to Table 3 and Table 4 are also applicable here, which will not be elaborated for the sake of brevity.

According to another embodiment of the present invention, the type information may indicate a third type corresponding to a downlink sensing report phase of the WLAN sensing, and the trigger frame of the third type may indicate the station device to send a downlink sensing measurement result. For example, the first information field may also include: bandwidth information for the station device to send the downlink sensing measurement result. For example, the first information field may further include: at least one sensing measurement setup identifier, and/or an identifier of at least one sensing measurement instance corresponding to each sensing measurement setup identifier. The at least one sensing measurement setup identifier and the identifier of the at least one sensing measurement instance may be included in dialog token information in the trigger frame. For example, the trigger frame may further include a second information field related to the station device, and in the case where the type information indicates the third type, the second information field includes at least one of: identification information of the station device; allocation information of a resource unit allocated to the station device for sending the downlink sensing measurement result; allocation information of a spatial stream allocated to the station device for sending the downlink sensing measurement result; and indicating a modulation and coding scheme to be used by the station device to send the downlink sensing measurement result.

The embodiments described above with reference to Table 5 and Table 6 are also applicable here, which will not be elaborated for the sake of brevity.

In step 520, the station device may perform a corresponding communication operation according to the trigger frame in step 510. For example, according to the trigger frame in different phases, the station device may send different information frames to the AP.

For example, referring to FIG. 6(a), if the trigger frame received by the station device in step 510 includes various information corresponding to the first type (the polling phase), and the station device is available, in step 520, the station device may send a response frame (CTS-to-self) to the AP to indicate that the station device is in an available status.

For example, referring to FIG. 6(b), if the trigger frame received in step 510 includes various information corresponding to the second type (the uplink sensing measurement phase), in step 520, the station device may send an uplink NDP frame or a secure frame to the AP for the AP to perform uplink sensing measurement.

For example, referring to FIG. 6(c), if the trigger frame received in step 510 includes various information corresponding to the third type (the downlink sensing report phase), in step 520, the station device may feed back the downlink sensing measurement result to the AP.

FIG. 7 is a schematic block diagram of a communication apparatus according to illustrative embodiments of the present invention. The communication apparatus 700 shown in FIG. 7 may include a processing module 710 and a transceiving module 720. In an embodiment of the present invention, the communication apparatus 700 shown in FIG. 7 may be applied to an initiator (access point device); in another embodiment of the present invention, the communication apparatus 700 shown in FIG. 7 may be applied to a responder (station device).

In the case where the communication apparatus 700 shown in FIG. 7 may be applied to the initiator (access point device), the processing module 710 may be configured to: determine a trigger frame. The trigger frame may include a first information field, the first information field may include type information indicating a type of the trigger frame, and the type of the trigger frame may indicate different phases of WLAN sensing initiated by the access point device. The transceiving module 720 may be configured to send the trigger frame. That is, the communication apparatus 700 shown in FIG. 7 is able to perform the methods described with reference to FIG. 3 and FIG. 4 and the operations performed by the AP in FIG. 6(a) to FIG. 6(c), and embodiments described with reference to Table 1 to Table 6 are applicable here, which will not be elaborated for the sake of brevity.

In the case where the communication apparatus 700 shown in FIG. 7 may be applied to the responder (station device), the transceiving module 720 may be configured to: receive a trigger frame. The trigger frame may include a first information field, the first information field may include type information indicating a type of the trigger frame, and the type of the trigger frame may indicate different phases of WLAN sensing initiated by an access point device. The processing module 720 may be configured to: control implementation of a corresponding communication operation according to the trigger frame. That is, the communication apparatus 700 shown in FIG. 7 is able to perform the methods described with reference to FIG. 5 and the operations performed by the STA in FIG. 6(a) to FIG. 6(c), and embodiments described with reference to Table 1 to Table 6 are applicable here, which will not be elaborated for the sake of brevity.

It will be understood that the communication apparatus 700 shown in FIG. 7 is illustrative, and embodiments of the present invention are not limited thereto. For example, the communication apparatus 700 may further include other modules, such as a memory module and the like. Furthermore, individual modules in the communication apparatus 700 may be combined into more complex modules, or may be divided into more individual modules.

Based on the same principles as the methods according to embodiments of the present invention, embodiments of the present invention further provide an electronic device, which includes a processor and a memory; the memory has stored therein a machine-readable instruction (or may be referred to as a "computer program"); and the processor is configured to execute the machine-readable instruction to implement the method described with reference to FIG. 3 to FIG. 6.

Embodiments of the present invention also provide a computer-readable storage medium having stored therein a computer program that, when executed by a processor, causes the method described with reference to FIG. 3 to FIG. 6 to be implemented.

In illustrative embodiments, the processor may be logical blocks, modules and circuits configured to implement or perform various illustrative embodiments described in connection with the contents in the present invention, such as a Central Processing Unit (CPU), a general processor, a Digital Signal Processor (DSP), an Application Specific Integrated Circuit (ASIC), a Field Programmable Gate Array (FPGA), or other programmable logic devices, transistor logic devices, hardware components or any combination thereof. The processor may also be a combination used to implement computing functions, for example, a combination including one or more microprocessors, or a combination including a DSP and a microprocessor, or the like.

In illustrative embodiments, the memory may include but not be limited to, for example, a Read Only Memory (ROM), a Random Access Memory (RAM), an Electrically Erasable Programmable Read Only Memory (EEPROM), a Compact Disc Read Only Memory (CD-ROM) or other optical disk memories, optical disc memories (including compact discs, laser discs, optical discs, digital general discs, Blu-ray discs and the like), magnetic disk storage mediums or other magnetic storage devices, or any other medium that can be used to carry or store program codes in the form of instructions or data structures and can be accessed by a computer.

It should be understood that although steps in the flowchart of the accompanying drawings are shown sequentially as indicated by arrows, the steps are not necessarily performed sequentially in the order indicated by the arrows. Unless explicitly stated otherwise in the present invention, there is no strict sequential limitation on the execution of these steps, which may be performed in other orders. In addition, at least some of the steps in the flowchart of the accompanying drawings may include a plurality of sub-steps or a plurality of phases, which are not necessarily executed at the same time, and may be executed at different times, and the plurality of sub-steps or phases are not necessarily performed sequentially, but may be performed alternately or in turn with other steps or at least part of sub-steps or phases of other steps.

Although the present invention has been illustrated and described with reference to certain embodiments of the present invention, it will be understood by those skilled in the art that various changes in form and details may be made therein without departing from the scope of the present invention. Therefore, the scope of the present invention should not be limited by the embodiments, but should be defined by the appended claims and their equivalents.

## Claims

1. A communication method, performed by an access point device, comprising:
determining a trigger frame, wherein the trigger frame comprises a first information field, the first information field comprises type information indicating a type of the trigger frame, and the type of the trigger frame indicates different phases of wireless local area network sensing initiated by the access point device; and
sending the trigger frame.

2. The communication method according to claim 1, wherein the type information indicates a first type corresponding to a polling phase of the wireless local area network sensing,
wherein the trigger frame of the first type is used for detecting an availability status of a station device.

3. The communication method according to claim 2, wherein the first information field further comprises: bandwidth information for the station device to send a response frame as a response to the trigger frame.

4. The communication method according to claim 2, wherein the trigger frame further comprises a second information field related to the station device,
wherein in a case where the type information indicates the first type, the second information field comprises:
identification information of the station device; and
allocation information of a resource unit allocated to the station device for sending a response frame.

5. The communication method according to claim 1, wherein the type information indicates a second type corresponding to an uplink sensing measurement phase of the wireless local area network sensing,
wherein the trigger frame of the second type indicates a station device to send an uplink sensing measurement frame.

6. The communication method according to claim 5, wherein the first information field further comprises: bandwidth information for the station device to send the uplink sensing measurement frame.

7. The communication method according to claim 5, wherein the trigger frame further comprises a second information field related to the station device,
wherein in a case where the type information indicates the second type, the second information field comprises at least one of
identification information of the station device;
allocation information of a resource unit allocated to the station device for sending the uplink sensing measurement frame;
allocation information of a spatial stream allocated to the station device for sending the uplink sensing measurement frame; and
uplink target power information indicating a power value at which the access point device expects to receive the uplink sensing measurement frame.

8. The communication method according to claim 1, wherein the type information indicates a third type corresponding to a downlink sensing report phase of the wireless local area network sensing,
wherein the trigger frame of the third type indicates a station device to send a downlink sensing measurement result.

9. The communication method according to claim 8, wherein the first information field further comprises: bandwidth information for the station device to send the downlink sensing measurement result.

10. The communication method according to claim 8, wherein the trigger frame further comprises a second information field related to the station device,
wherein in a case where the type information indicates the third type, the second information field comprises at least one of
identification information of the station device;
allocation information of a resource unit allocated to the station device for sending the downlink sensing measurement result;
allocation information of a spatial stream allocated to the station device for sending the downlink sensing measurement result; and
indicating a modulation and coding scheme to be used by the station device to send the downlink sensing measurement result.

11. The communication method according to any one of claims 1 to 10, wherein the first information field further comprises: at least one sensing measurement setup identifier, and/or an identifier of at least one sensing measurement instance corresponding to each sensing measurement setup identifier.

12. The communication method according to claim 11, wherein the at least one sensing measurement setup identifier and the identifier of the at least one sensing measurement instance are dialog token information.

13. A communication method, performed by a station device, comprising:
receiving a trigger frame, wherein the trigger frame comprises a first information field, the first information field comprises type information indicating a type of the trigger frame, and the type of the trigger frame indicates different phases of wireless local area network sensing initiated by an access point device; and
performing a corresponding communication operation according to the trigger frame.

14. The communication method according to claim 13, wherein the type information indicates a first type corresponding to a polling phase of the wireless local area network sensing,
wherein the trigger frame of the first type is used for detecting an availability status of a station device.

15. The communication method according to claim 14, wherein the first information field further comprises: bandwidth information for the station device to send a response frame as a response to the trigger frame.

16. The communication method according to claim 14, wherein the trigger frame further comprises a second information field related to the station device,
wherein in a case where the type information indicates the first type, the second information field comprises:
identification information of the station device; and
allocation information of a resource unit allocated to the station device for sending a response frame.

17. The communication method according to claim 13, wherein the type information indicates a second type corresponding to an uplink sensing measurement phase of the wireless local area network sensing,
wherein the trigger frame of the second type indicates the station device to send an uplink sensing measurement frame.

18. The communication method according to claim 17, wherein the first information field further comprises: bandwidth information for the station device to send the uplink sensing measurement frame.

19. The communication method according to claim 17, wherein the trigger frame further comprises a second information field related to the station device,
wherein in a case where the type information indicates the second type, the second information field comprises at least one of
identification information of the station device;
allocation information of a resource unit allocated to the station device for sending the uplink sensing measurement frame;
allocation information of a spatial stream allocated to the station device for sending the uplink sensing measurement frame; and
uplink target power information indicating a power value at which the access point device expects to receive the uplink sensing measurement frame.

20. The communication method according to claim 13, wherein the type information indicates a third type corresponding to a downlink sensing report phase of the wireless local area network sensing,
wherein the trigger frame of the third type indicates the station device to send a downlink sensing measurement result.

21. The communication method according to claim 20, wherein the first information field further comprises: bandwidth information for the station device to send the downlink sensing measurement result.

22. The communication method according to claim 20, wherein the trigger frame further comprises a second information field related to the station device,
wherein in a case where the type information indicates the third type, the second information field comprises at least one of:
identification information of the station device;
allocation information of a resource unit allocated to the station device for sending the downlink sensing measurement result;
allocation information of a spatial stream allocated to the station device for sending the downlink sensing measurement result; and
indicating a modulation and coding scheme to be used by the station device to send the downlink sensing measurement result.

23. The communication method according to any one of claims 13 to 22, wherein the first information field further comprises: at least one sensing measurement setup identifier, and/or an identifier of at least one sensing measurement instance corresponding to each sensing measurement setup identifier.

24. The communication method according to claim 23, wherein the at least one sensing measurement setup identifier and the identifier of the at least one sensing measurement instance are dialog token information.

25. A communication apparatus, applicable to an access point device, comprising:
a processing module, configured to: determine a trigger frame, wherein the trigger frame comprises a first information field, the first information field comprises type information indicating a type of the trigger frame, and the type of the trigger frame indicates different phases of wireless local area network sensing initiated by the access point device; and
a transceiving module, configured to: send the trigger frame.

26. A communication apparatus, applicable to a station device, comprising:
a transceiving module, configured to: receive a trigger frame, wherein the trigger frame comprises a first information field, the first information field comprises type information indicating a type of the trigger frame, and the type of the trigger frame indicates different phases of wireless local area network sensing initiated by an access point device; and
a processing module, configured to: control implementation of a corresponding communication operation according to the trigger frame.

27. An electronic device, comprising:
a memory,
a processor, and
a computer program stored in the memory and executable on the processor,
wherein the processor, when executing the computer program, performs the method according to any one of claims 1 to 12 or the method according to any one of claims 13 to 24.

28. A computer-readable storage medium having stored therein a computer program that, when executed by a processor, causes the method according to any one of claims 1 to 12 or the method according to any one of claims 13 to 24 to be implemented.
